Europäisches Patentamt

European Patent Office

Office européen des brevets

(11) Veröffentlichungsnummer: **0 020 919**
B1

(12) **EUROPÄISCHE PATENTSCHRIFT**

(45) Veröffentlichungstag der Patentschrift:
**12.10.83**

(51) Int. Cl.³: **F 16 B 13/08**

(21) Anmeldenummer: **80102161.9**

(22) Anmeldetag: **22.04.80**

(54) **Befestigungselement mit Ankerbolzen und Spreizkeil.**

(30) Priorität: **01.06.79 DE 2922567**

(43) Veröffentlichungstag der Anmeldung:
**07.01.81 Patentblatt 81/1**

(45) Bekanntmachung des Hinweises auf die Patenterteilung:
**12.10.83 Patentblatt 83/41**

(84) Benannte Vertragsstaaten:
**AT BE CH FR LI SE**

(56) Entgegenhaltungen:
**DE-C-1 033 614**
**FR-A-1 525 224**
**GB-A-875 261**
**US-A-1 698 570**
**US-A-1 792 974**
**US-A-2 287 395**
**US-A-3 505 824**

**DAS BAUZENTRUM, Heft 4, 1970 «Hema-Leichtbeton-nägel» Seite 105**

(73) Patentinhaber: **HILTI Aktiengesellschaft,
FL-9494 Schaan (LI)**

(72) Erfinder: **Herb, Armin, Lärchenstrasse 9,
D-8123 Peissenberg (DE)**

(74) Vertreter: **Berg, Wilhelm, Dr. et al, Dr. Berg, Dipl.-Ing.
Stapf, Dipl.-Ing. Schwabe, Dr. Dr. Sandmair
Mauerkircherstrasse 45, D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Befestigungselement mit Ankerbolzen und Spreizkeil

Die Erfindung betrifft ein Befestigungselement mit Ankerbolzen und diesem gegenüber verschiebbarem Spreizkeil, wobei der Ankerbolzen einen abgewinkelten Flansch aufweist, der mit einer Aussparung für den Durchtritt des Spreizkeils versehen ist, Wandteile der Aussparung zusammen mit der zentrumsseitigen achsparallelen Flanke des Ankerbolzenschaftes Führungen für den Spreizkeil bilden, und die der Führung des Spreizkeiles dienende Flanke des Ankerbolzenschaftes sich, entgegen der Eintreibrichtung gesehen, bis wenigstens auf Höhe der führenden Wandteile des Flansches erstreckt.

Befestigungselemente dieser Gattung kommen insbesondere zum Abhängen von Zwischendecken, Verkleidungen, Gerüsten, Rohren, Leitungen und dergleichen zum Einsatz. Alle diese Elemente finden in ausserordentlich grossen Stückzahlen Anwendung. Es ist daher wichtig, dass diese Elemente wirtschaftlich herstellbar sind und unter geringstem Zeitaufwand und ohne besondere Anforderungen an Werkzeuge gesetzt werden können. Aus Sicherheitsgründen wird von diesen Elementen weiterhin gefordert, dass sie unter Belastung ein gewisses Nachspreizverhalten zeigen.

Bekannte Elemente sind zumeist auf dem Keil-Spreizprinzip aufgebaut. Dabei ist der eine Teil des Elementes als Ankerbolzen ausgebildet, welcher der Aufnahme der abzuhängenden Last dient. Entlang einer am Ankerbolzen angeordneten Keilfläche lässt sich bei diesen bekannten Elementen ein üblicherweise keilförmiges Spreizelement verschieben. Bei diesen Elementen ist der Aufbau derart, dass nach Erzeugen einer gewissen Vorspreizung beim Setzen des Elementes in eine Aufnahmebohrung eine gewisse Vorspreizung zustande kommt, welche ausreicht, wenigstens das Eigengewicht des abzuhängenden Gegenstandes zu tragen. Bei weiterer Belastung erfolgt ein Nachspreizen des Elementes.

Ein Befestigungselement der angegebenen Gattung ist aus der US 2 287 395 bekannt. Der Ankerbolzen weist eine Keilfläche auf, welche sich in Eintreibrichtung der Umfangskontur des Bolzens nähert. Im rückwärtigen Bereich weist, wie gesagt, der Ankerbolzen einen Flansch auf, der mit einer Aussparung für den Durchtritt des Spreizkeiles versehen ist. Die Wandteile dieser Aussparung des Flansches dienen der Führung des Spreizkeiles während des Setzens des Befestigungselementes und ermöglichen ausserdem eine Vormontage zu einer Einheit bestehend aus Ankerbolzen und Spreizkeil.

Sowohl bei der Vormontage als auch beim Setzen des erläuterten Befestigungselementes ist es wichtig, dass Ankerbolzen und Spreizkeil satt aneinanderliegen, so dass diese sich insgesamt zu einem im wesentlichen kreisrunden Querschnitt ergänzen. Nur so können die Bohrlochtoleranzen in kleinstem Rahmen gehalten werden, so dass das Befestigungselement optimale Verankerungswerte erreicht. Liegen die Teile nicht satt aneinander, besteht einerseits die Gefahr, dass das Element nicht richtig in die Bohrung eingeführt werden kann und anderseits kann eine Ausreibung des Bohrloches entstehen, so dass die Verankerungswerte eine wesentliche Einbusse erleiden. Für dieses satte Aneinanderliegen von Ankerbolzen und Spreizkeil ist die der Führung des Spreizkeiles dienende Aussparung im Flansch des Ankerbolzens von massgebender Bedeutung. Aus diesem Grunde werden bei der Herstellung des Ankerbolzens, insbesondere an den Führungsbereich des Flansches, ausserordentlich hohe Anforderungen an Massgenauigkeit und dergleichen gestellt. Dies führt zum Nachteil, dass sich das Element kaum noch wirtschaftlich herstellen lässt, was sich insbesondere durch den Umstand, dass es sich um einen Massenartikel handelt, nachteilig bemerkbar macht.

Aufgabe der Erfindung ist es daher, ein Befestigungselement der angegebenen Gattung wesentlich wirtschaftlicher herzustellen und dennoch eine sichere Führung des Spreizelementes auch im Flanschbereich zu erhalten.

Diese Aufgabe wird erfindungsgemäss dadurch gelöst, dass der Flansch aus dem Ankerbolzenschaft durch Abbiegung erzeugt ist, und die Flanke in den Bereich der Abbiegung verlängert ist.

Die erfindungsgemässe Lösung hat insbesondere folgende Vorteile: Dadurch, dass der Flansch aus dem Ankerbolzenschaft durch Abbiegung erzeugt ist, z.B. der Ankerbolzen als Stanzbiegeteil ausgebildet ist, gelingt eine ausserordentlich wirtschaftliche Herstellung. Eine sichere Führung wird dabei insbesondere dadurch erreicht, dass die Flanke in den Bereich der Abbiegung verlängert ist.

Bei der bevorzugten clipartigen Verrastung des Spreizkeiles, beispielsweise zum Zwecke der Vormontage, ist dadurch gewährleistet, dass die führenden Wandteile des Flansches den Spreizkeil gegen eine ausreichende achsparallele Anlage pressen, so dass ein Abheben des Spreizkeiles unterbunden ist.

Bevorzugt kann die achsparallele Führung des Spreizkeiles dadurch erfolgen, dass die Verlängerung im Bereich der Abbiegung eine der Führung des Spreizkeiles dienende Sicke aufweist. Dadurch besteht die Möglichkeit, dass der Flansch im herkömmlichen Sinne abgebogen werden kann, wobei ein Bogen zwischen Ankerbolzenschaft und Flansch entsteht. In diesen Bogen hinein kann die Sicke geprägt werden. Diese erstreckt sich wiederum bis wenigstens auf Höhe der führenden Wandteile des Flansches. Dadurch ergibt sich ein wenigstens linienförmiger, achsparalleler, sich bis auf Höhe der führenden Wandteile erstreckender Anschlag.

Bevorzugt ist die Biegestelle im Bereich der Flanke über die rückwärtige Stirnfläche des Flansches hochgezogen. Dadurch wird die achsparallele Flanke des Ankerbolzenschaftes entsprechend verlängert, und der Bogen zwischen Ankerbolzenschaft und Flansch beginnt erst in einem nicht mehr der Führung dienenden Bereich.

Gemäss einem weiteren Vorschlag der Erfindung kann die Biegestelle zwischen Ankerbolzenschaft und Flansch entgegen der Eintriebrichtung nach hinten über die Höhe der führenden Wandteile des Flansches hinaus verlegt werden. Es steht dadurch eine achsparallele Flanke des Ankerbolzenschaftes bis auf Höhe der führenden Wandteile des Flansches zur Verfügung, wobei der Bogen zwischen Ankerbolzenschaft und Flansch erst nach diesem nicht mehr der Führung dienenden Bereich beginnt.

Die Erfindung soll nunmehr anhand von sie beispielsweise wiedergebenden Zeichnungen näher erläutert werden, und zwar zeigen:

Fig. 1 ein komplettes Befestigungselement, in teilweise geschnittener Darstellung, mit Sicke,

Fig. 2 eine Draufsicht auf das Befestigungselement der Fig. 1,

Fig. 3 einen Schnitt längs der Linie III–III der Fig. 2,

Fig. 4 den Ankerbolzen eines weiteren Befestigungselementes nach der Erfindung.

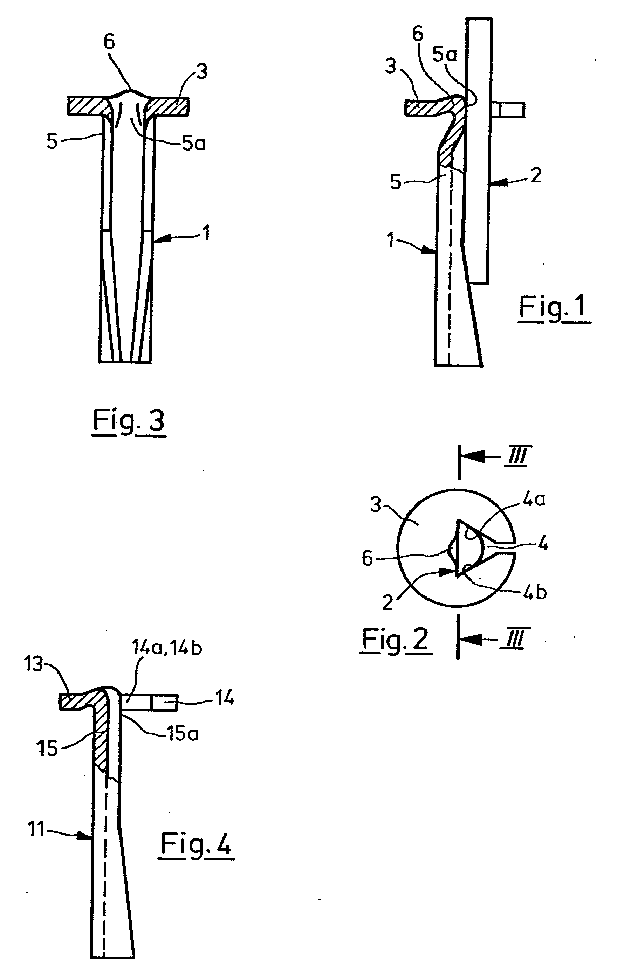

Die Fig. 1 bis 3 zeigen eine Ausführungsform des erfindungsgemässen Befestigungselementes, welches, wie insbesondere die Fig. 1 und 2 zeigen, aus dem insgesamt mit 1 bezeichneten Ankerbolzen und dem insgesamt mit 2 bezeichneten Spreizkeil besteht. Im rückwärtigen Bereich weist der Ankerbolzen 1 einen abgebogenen Flansch 3 auf. Der Flansch 3 weist eine Ausnehmung 4 zur Führung des Spreizkeiles 2 auf. Zu diesem Zwecke enthält die Aussparung 4 führende Wandteile 4a, 4b. Die führenden Wandteile 4a, 4b bilden zusammen mit der Flanke 5a des Ankerbolzenschaftes 5 die Gesamtführung für den Spreizkeil 2. Zur Verlängerung der Flanke 5a ist eine Sicke 6 vorgesehen.

Fig. 4 zeigt einen insgesamt mit 11 bezeichneten Ankerbolzen einer weiteren Ausführungsform des erfindungsgemässen Befestigungselementes. Im rückwärtigen Bereich weist der Ankerbolzen 11 wiederum einen abgebogenen Flansch 13 auf. Dieser Flansch 13 weist eine Aussparung 14 mit Führungsflanken 14a, 14b für einen nicht gezeichneten Spreizkeil auf. Die Biegestelle zwischen Flansch 13 und Ankerbolzenschaft 15 ist über die rückwärtige Stirnfläche des Flansches 13 hochgezogen, so dass die zentrumsseitige Flanke 15a des Ankerbolzenschaftes 15 bis wenigstens auf Höhe des Flansches 13 achsparallel verläuft. Dadurch ist auf Höhe der führenden Wandteile 14a, 14b des Flansches 13 eine vollkommen achsparallele Führung sichergestellt.

## Patentansprüche

1. Befestigungselement mit Ankerbolzen (1; 11) und diesem gegenüber verschiebbarem Spreizkeil (2), wobei der Ankerbolzen (1, 11) einen abgewinkelten Flansch (3; 13) aufweist, der mit einer Aussparung (4; 14) für den Durchtritt des Spreizkeils (2) versehen ist, sowie Wandteile (4a, 4b; 14a, 14b) der Aussparung (4; 14) zusammen mit einer zentrumsseitigen achsparallelen Flanke (5a, 15a) des Ankerbolzenschaftes (5; 15) Führungen für den Spreizkeil (2) bilden, und die der Führung des Spreizkeiles (2) dienende Flanke (5a; 15a) des Ankerbolzenschaftes sich, entgegen der Eintreibrichtung gesehen, bis wenigstens auf Höhe der führenden Wandteile (4a, 4b; 14a, 14b) des Flansches (3; 13) erstreckt, dadurch gekennzeichnet, dass der Flansch (3, 13) aus dem Ankerbolzenschaft (5, 15) durch Abbiegung erzeugt ist, und die Flanke (5a, 15a) in den Bereich der Abbiegung verlängert ist.

2. Befestigungselement nach Anspruch 1, dadurch gekennzeichnet, dass die Verlängerung im Bereich der Abbiegung eine der Führung des Spreizkeiles (2) dienende Sicke (6) aufweist.

3. Befestigungselement nach Anspruch 1, dadurch gekennzeichnet, dass die Biegestelle im Bereich der Flanke (15a) über die rückwärtige Stirnfläche des Flansches (13) hochgezogen ist.

## Claims

1. Fixing device having a stay bolt (1; 11) and a wedging bar (2) which is displaceable relatively thereto, the stay bolt (1, 11) comprising a flange (3; 13) extending at an angle, which is provided with a recess (4; 14) for the passing of the wedging bar (2), as well as wall members (4a, 4b; 14a, 14b) of the recess (4; 14) forming guides for the wedging bar (2), together with a flank (5a, 15a) of the shaft of the stay bolt (5; 15), which is parallel to the axis and faces the center, and the flank (5a; 15a) which serves for the guiding of the wedging bar (2) extending, seen against the direction of insertion, up to at least the height of the guiding wall members (4a, 4b; 14a, 14b) of the flange (3; 13), characterized in that the flange (3, 13) is formed from the shaft (5, 15) of the stay bolt by bending, and the flank (5, 15a) is prolongated into the region of the bending.

2. Fixing device according to claim 1, characterized in that the prolongation comprises in the region of the bending a bead (6) serving for the guiding of the wedging bar (2).

3. Fixing device according to claim 1, characterized in that the location of the bending is pulled up, in the region of the flank (15a), above the backward front face of the flange (13).

## Revendications

1. Elément de fixation à boulon d'ancrage et à cône d'expansion déplaçable par rapport à ce dernier, du type dans lequel le boulon d'ancrage comporte une collerette coudée qui est pourvue d'une ouverture pour le passage du cône d'expansion alors que des parties de parois de l'ouverture formant, avec le flanc de la tige du boulon d'ancrage, qui est parallèle à l'axe et est situé du côté du centre, des guidages pour ledit cône d'expansion, caractérisé par le fait que le flanc (5a, 15a) de la tige (5, 15) du boulon d'ancrage et servant de guidage pour le cône d'expansion (2), s'étend, si l'on regarde en direction opposée à celle de l'introduction, au moins jusqu'à la hauteur des parties de guidage des parois (4a, 4b, 14a, 14b) de la collerette (3, 13).

2. Elément de fixation selon la revendication 1, caractérisé par le fait qu'au niveau du coude entre la tige (5) du boulon d'ancrage (5) et de la collerette (3) est prévue une encoche (6) servant au guidage du cône d'expansion et qui s'étend, si l'on regarde en direction opposée à celle de l'introduction, au moins jusqu'à la hauteur des parties de guidage des parois (4a, 4b) de la collerette (3).

3. Elément de fixation selon la revendication 1, caractérisé par le fait que le coude entre la tige (15) du boulon d'ancrage et la collerette (13) s'étend, si l'on regarde en direction opposée à celle de l'introduction, au-delà de la hauteur des parties de guidage des parois (14a, 14b) de la collerette (13).

Fig. 3

Fig. 1

Fig. 2

Fig. 4